# EUROPÄISCHE PATENTSCHRIFT

(11) **EP 1 271 010 B1**
(45) Veröffentlichungstag und Bekanntmachung des Hinweises auf die Patenterteilung: **12.11.2003**
(21) Anmeldenummer: 01114700.6
(22) Anmeldetag: 19.06.2001
(51) Int. Cl.: F16H 61/28

(54) **Automatisierter Antriebsstrang für ein Kraftfahrzeug und Verfahren zum Einlegen eines Ganges**
Automated driveline for motor vehicle and method of engaging a gear
Boîte de vitesses robotisée pour véhicule et méthode de changement de vitesses

(43) Veröffentlichungstag der Anmeldung: 02.01.2003
(73) Patentinhaber: Getrag Ford Transmissions GmbH, 50725 Köln (DE)
(72) Erfinder: Bosch, Helmuth, D-50858 Köln (DE)
(74) Vertreter: Steil, Christian, Dipl.-Ing.

(56) Entgegenhaltungen:
- EP-A- 0 310 387
- EP-A- 1 067 319
- DE-A- 19 914 394
- DE-C- 19 615 267
- DE-C- 19 845 604

## Beschreibung

Die vorliegende Erfindung betrifft einen automatisierten Antriebsstrang für ein Kraftfahrzeug, mit wenigstens einer Hauptkupplung und einem Stufengetriebe, wobei das Stufengetriebe eine Mehrzahl von synchronisierten Gängen aufweist, die mittels einer Aktuatoreinrichtung ein- und auslegbar sind, die von einer Steuereinrichtung gesteuert ist, wobei die Steuereinrichtung ein Synchronkraftsteuermodul aufweist und wobei die Aktuatoreinrichtung zum Einlegen eines Ganges ein Schaltglied gemäß einer Synchronkraftvorgabe durch das Synchronkraftsteuermodul in Richtung einer Gangposition bewegt, in der der Gang eingelegt ist.

Die vorliegende Erfindung betrifft ferner ein Verfahren zum Einlegen eines Ganges eines Stufengetriebes eines Antriebsstranges, mit dem Schritt, ein Schaltglied gemäß einer Synchronkraftvorgabe durch ein Synchronkraftsteuermodul in Richtung einer Gangposition zu bewegen, in der der Gang eingelegt ist.

Ein derartiger automatisierter Antriebsstrang bzw. ein solches Verfahren zum Einlegen eines Ganges sind bspw. bekannt aus der DE 196 15 267 C1.

Klassischerweise unterscheidet man bei Getrieben für Kraftfahrzeuge mit Verbrennungsmotor sog. Automatikgetriebe mit hydrodynamischem Drehmomentwandler sowie Handschaltgetriebe.

Aufgrund der formschlüssigen Art der Kraftübertragung haben Handschaltgetriebe einen besseren Wirkungsgrad. Aus Komfortgründen sowie aus Gründen einer Optimierung des fahrzeugspezifischen Kraftstoffverbrauches gibt es seit einigen Jahren ferner eine Tendenz, Handschaltgetriebe zu automatisieren. Bei den mit solchen Getrieben versehenen automatisierten Antriebssträngen werden die Hauptkupplung, also die gewöhnlich als Anfahrund Trennkupplung dienende Kupplung, und die Schaltmuffen des Handschaltgetriebes durch geeignete Aktuatoren betätigt. Die Aufforderung zu einem Gangwechsel kann dabei wie bisher durch einen Handschalthebel vom Fahrer eingeleitet werden. Alternativ ist meist auch ein Automatikmodus implementiert, in dem die Gänge automatisch gewechselt werden.

Ferner besteht seit einigen Jahren wieder eine Tendenz hin zu sog. Doppelkupplungsgetrieben, die zwei Hauptkupplungen und innerhalb des Stufengetriebes zwei parallele Kraftübertragungszweige aufweisen. Die Gänge sind auf die parallelen Zweige derart verteilt, daß aufeinander folgende Gangwechsel ohne Zugkrafteinbruch, also unter Last, erfolgen können. Dabei wird das anstehende Moment durch überschneidende Betätigung der zwei Hauptkupplungen von einem Kraftübertragungszweig auf den anderen übergeben.

Auch Doppelkupplungsgetriebe werden meist automatisiert ausgeführt, die Kupplungen und die Schaltglieder (Schaltmuffen) zum Betätigen von Schaltkupplungen innerhalb des Getriebes werden durch geeignete Aktuatoren betätigt.

Bei den Aktuatoren unterscheidet man zwischen hydraulischen/pneumatischen Aktuatoren und Aktuatoren auf Elektromotorbasis.

Bei Verwendung von Elektromotoren ist es bekannt, als Rotations-Translations-Wandler eine Schaltwalze oder mehrere Schaltwalzen vorzusehen.

Die Schaltkupplungen zum Ein- und Auslegen von Gängen innerhalb des Stufengetriebes sind in der Regel als Synchronkupplungen ausgeführt. Derartige Synchronkupplungen sind allgemein bekannt und, je nach Anforderung, mit Einfach-, Zweifach- oder Dreifachkonus ausgeführt.

Ferner sind die Synchronkupplungen meist mit Sperrmitteln versehen, die ein Durchschalten, also einen Formschluß, verhindern, bis eine hinreichend niedrige Differenzdrehzahl erreicht ist.

Die Sperrmittel sind in der Regel mechanisch ausgeführt und verhindern das Durchschalten - jedenfalls theoretisch - lediglich so lange, so lange nicht eine bestimmte Schaltkraft überschritten wird.

Demgemäß weisen die Steuereinrichtungen für herkömmliche Aktuatoreinrichtungen von automatisierten Antriebssträngen ein Synchronkraftsteuermodul auf. Die Aktuatoreinrichtung bewegt dann zum Einlegen eines Ganges ein Schaltglied wie eine Schaltmuffe gemäß einer Synchronkraftvorgabe durch Synchronkraftsteuermodul in Richtung einer Gangposition, in der der Gang eingelegt ist.

Die Synchronkraftvorgabe ist dabei in der Regel so gewählt, daß ein Gangwechsel möglichst schnell durchgeführt wird, wobei die Dauerhaltbarkeit der benutzten Getriebemechanik gewährleistet wird. Durch das Beschleunigen und Verzögern der jeweiligen zugehörigen Drehmassen eines Ganges ergibt sich oft zwangsläufig eine Rückmeldung an den Fahrer/Bediener des Kraftfahrzeuges in Form von unerwünschten (Fahrzeug-) Beschleunigungen bzw. Beschleunigungsgradienten. Hauptziel eines Synchronkraftsteuermoduls aus Anwendersicht ist daher auch die Minimierung unerwünschter Beschleunigungseffekte bei fahrsituationsbedingt akzeptablen Schaltzeiten.

Durch diese Randbedingungen basiert die gewählte Synchronkraftvorgabe durch das Synchronkraftsteuermodul im Stand der Technik häufig auf einem Kompromiß.

Vor diesem Hintergrund besteht das der Erfindung zugrunde liegende Problem darin, einen verbesserten automatisierten Antriebsstrang bzw. ein verbessertes Verfahren zum Einlegen eines Ganges anzugeben, mit denen sich günstigere Kompromisse zwischen schnellem Gangeinlegen und für den Fahrer/Bediener komfortablen Schaltungen erzielen lassen.

Dieses Problem wird bei dem eingangs genannten automatisierten Antriebsstrang dadurch gelöst, daß die Steuereinrichtung ferner ein Geschwindigkeitsregelmodul aufweist und daß die Aktuatoreinrichtung zum Einlegen eines Ganges das Schaltglied zunächst gemäß einer Geschwindigkeitsvorgabe durch das Geschwindigkeitsregelmodul und anschließend gemäß einer Synchronkraftvorgabe durch das Synchronkraftsteuermodul von der neutralen Position in Richtung der Gangposition bewegt.

Bei dem eingangs genannten Verfahren zum Einlegen eines Ganges wird dieses Problem dadurch gelöst, daß das Schaltglied zum Einlegen eines Ganges zunächst gemäß einer Geschwindigkeitsvorgabe durch ein Geschwindigkeitsregelmodul und anschließend gemäß einer Synchronkraftvorgabe durch das Synchronkraftsteuermodul von der neutralen Position in Richtung der Gangposition bewegt wird.

Durch den Gedanken, die Bewegung des Schaltgliedes (wie einer Schaltmuffe einer üblichen Synchronkupplung) zunächst gemäß einer Geschwindigkeitsvorgabe und erst anschließend gemäß einer Synchronkraftvorgabe zu bewegen, erhöhen sich die Freiheitsgrade bei der Auslegung von Schaltabläufen erheblich.

In diesem Zusammenhang ist zu berücksichtigen, daß der Begriff "Steuern" im vorliegenden Zusammenhang sowohl Steuern im klassischen Sinne mit offenem Kreis als auch Regeln im klassischen Sinne, also mit geschlossenem Regelkreis bedeuten kann. Sofern vorliegend von "Regeln" die Rede ist, wird immer von einem geschlossenen Regelkreis ausgegangen.

Durch das Regeln der Geschwindigkeit des Schaltgliedes in einem ersten Bewegungsabschnitt beim Einlegen des Ganges kann, je nach Anforderung, entweder ein sehr langsames oder ein sehr schnelles Heranfahren an eine Ansynchronisierungsposition erfolgen.

Von besonderem Vorzug ist dabei, wenn das Geschwindigkeitsregelmodul einen PID-Regler aufweist.

Ein derartiger Regler ist insbesondere bei elektromotorischen Systemen mit Gleichstrommotor von Vorzug, und zwar deswegen, weil es bei der Geschwindigkeitsvorgabe nicht so sehr auf die Genauigkeit ankommt, sondern vielmehr darauf, daß die vorgegebene Sollgeschwindigkeit trotz vieler unbekannter Getriebe-/Aktuatorgrößen, wie z.B. die Wicklungstemperatur eines Gleichstrommotors, sicher erreicht wird.

Gemäß einer weiteren bevorzugten Ausführungsform weist die Steuereinrichtung ferner ein Positionsregelmodul auf, und die Aktuatoreinrichtung bewegt das Schaltglied zum Einlegen eines Ganges zunächst gemäß der Geschwindigkeitsvorgabe durch das Geschwindigkeitsregelmodul, anschließend gemäß der Synchronkraftvorgabe durch das Synchronkraftsteuermodul und schließlich gemäß einer Positionsvorgabe durch das Positionsregelmodul in die Gangposition.

Durch das Bereitstellen eines dritten Moduls läßt sich in einem letzten Bewegungsabschnitt hin in die Gangposition wiederum eine andere Bewegungscharakteristik erzielen. Die Auslegung von Schaltvorgängen kann mit dem Positionsregelmodul und ggf. anderen Parametersätzen ebenfalls flexibel erfolgen.

Von besonderem Vorzug ist es, wenn das Positionsregelmodul einen PI-Regler aufweist.

Auf diese Weise läßt sich die gewählte Sollposition schnell, robust gegenüber unbekannten Umwelt-/Getriebeeinflüssen und doch präzise erreichen.

Dabei ist es von besonderem Vorzug, wenn das Positionsregelmodul die Istposition des Schaltgliedes und die Istgeschwindigkeit des Schaltgliedes (oder hierzu proportionale Parameter) auf den Eingang des PI-Reglers rückführt.

Durch das zusätzliche Rückführen der Istgeschwindigkeit (D-Anteil) wird eine insgesamt höhere Regelgüte und -robustheit erzielt. Der D-Anteil in der Signalrückführung ist insbesondere bei Aktuatoren mit Gleichstrommotor von Vorzug, da elektromotorische Gleichstrom-Aktuatorsysteme bereits ein integrales Verhalten bezüglich der Position haben, zur Stabilisierung des Regelvorganges.

Dabei ist es generell auch denkbar, daß der Positionsregelung in diesem Bewegungsabschnitt des Schaltgliedes eine Regelung von dessen Geschwindigkeit überlagert wird.

Gemäß einer bevorzugten Ausführungsform erfolgt die Umschaltung von dem Synchronkraftsteuermodul auf das Positionsregelmodul, sobald das Schaltglied eine Durchschaltposition erreicht hat.

Mit anderen Worten erfolgt die Umschaltung, sobald der Synchronisierungsvorgang abgeschlossen ist und die mechanischen Sperrmittel den Weg des Schaltgliedes F in Richtung Formschluß freigeben. Dabei kann die Umschaltung auf einer Erfassung des Weges des Schaltgliedes basieren.

Gemäß einer weiteren Ausführungsform erfolgt die Umschaltung von dem Synchronkraftsteuermodul auf das Positionsregelmodul, sobald zwischen den zu synchronisierenden Elementen eine bestimmte Differenzdrehzahl erreicht ist (die Null oder größer als Null sein kann).

Bei dieser Ausführungsform wird auch die Drehzahl der zu synchronisierenden Elemente erfaßt, um den geeigneten Umschaltzeitpunkt zu erkennen. Der Vorteil ist bei dieser Lösung, daß sich das Ende des Synchronisierungsvorganges früher erkennen läßt. Insgesamt ist ein schnellerer Schaltvorgang möglich.

Insgesamt ist es ebenfalls von Vorteil, wenn die Umschaltung von dem Geschwindigkeitsregelmodul auf das Synchronkraftsteuermodul erfolgt, sobald das Schaltglied eine Ansynchronisierungsposition erreicht hat.

Alternativ hierzu ist es auch denkbar, alternativ und/oder akkumulativ auf die Gegenkraft abzustellen. Diese läßt sich bspw. indirekt über einen Motorstrom eines Stellmotors oder ähnliches ableiten. Noch kostengünstiger ist es in der Regel, die Wellen/Kupplungsdrehzahlen zu betrachten und geeignete Umschaltkriterien zu definieren.

Gemäß einer weiteren bevorzugten Ausführungsform bewegt die Aktuatoreinrichtung das Schaltglied zum Auslegen eines Ganges gemäß einer Positionsvorgabe durch ein Positionsregelmodul in Richtung neutrale Position.

Insbesondere dann, wenn das Auslegen eines Ganges nicht zeitkritisch ist, wie bei einem Doppelkupplungsgetriebe, ist eine derartige Auslegestrategie bevorzugt. Es versteht sich, daß die Merkmale des Positionsregelmoduls dieselben sein können wie jene des Positionsregelmoduls zum Einlegen des Ganges, wie oben erwähnt.

Es versteht sich ferner, daß zum Ein- und Auslegen eines Ganges dasselbe Positionsregelmodul verwendbar sein kann, insbesondere dann, wenn das Modul als Softwaremodul realisiert ist. Unterschiedliches Reglerverhalten läßt sich unter Umständen durch geeignete Reglerparametrierung erreichen.

Dabei ist es besonders bevorzugt, wenn die Steuereinrichtung ferner ein Vorspannkraftsteuermodul aufweist und wenn die Aktuatoreinrichtung zum Auslegen eines Ganges das Schaltglied zunächst gemäß einer Vorspannkraftvorgabe durch das Vorspannkraftsteuermodul in Auslegerichtung vorspannt und anschließend gemäß der Positionsvorgabe durch das Positionsregelmodul von der Gangposition in die neutrale Position bewegt.

Solange die Vorspannkraft einen bestimmten Wert nicht überschreitet, wird durch sie der Gang nicht sofort ausgelegt. Dies erfolgt vielmehr erst dann, wenn das über den betreffenden Gang übertragene Drehmoment hinreichend weit eingebrochen ist, so daß der axiale Halt der formschlüssig ineinander greifenden Elemente (Hinterschnitte) zusammenbricht. Aufgrund der Vorspannkraftvorgabe "flutscht" der Gang dann hinaus, wie es bspw. beschrieben ist in der DE 198 45 604 C1.

Gemäß einer weiteren bevorzugten Ausführungsform weist die Aktuatoreinrichtung einen Elektromotor sowie Verriegelungsmittel auf, die das Schaltglied in der jeweiligen Position halten, wenn der Elektromotor abgeschaltet ist.

Auf diese Weise kann der Energiebedarf zur Automatisierung minimiert werden. Durch die Verriegelungsmittel und geeignete mechanische Konstruktion von Aktuator und Synchroneinheiten wird verhindert, daß ein Gang versehentlich durch Vibrationen oder dergleichen ein- oder ausgelegt wird.

Gemäß einer weiteren bevorzugten Ausführungsform werden Sollwerte für das Geschwindigkeitsregelmodul und/oder das Synchronkraftsteuermodul fahrsituationsabhängig bestimmt.

Bei dieser Ausführungsform lassen sich Schaltvorgänge in Abhängigkeit von der jeweiligen Fahrsituation schnell und für den Fahrer/Bediener des Kraftfahrzeuges dennoch komfortabel durchführen.

Ferner ist es bevorzugt, wenn die Sollkraft im Synchronkraftsteuermodul durch einen rampenförmig ausgebildeten Sollkraftverlauf vorgegeben wird.

Dies führt zu einem sanfteren Übergang vom Geschwindigkeitsregelmodul zum Synchronkraftsteuermodul.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges gemäß einer Ausführungsform der vorliegenden Erfindung;
- Fig. 2: ein beispielhaftes Gangschaltschema eines Stufengetriebes;
- Figuren 3a und 3b: schematische Schnittdarstellungen einer Synchronkupplung eines Stufengetriebes;
- Fig. 4: ein schematisches Blockschaltbild der Steuereinrichtung des Antriebsstranges der Fig. 1;
- Fig. 5: ein schematisches Blockschaltbild des Geschwindigkeitsregelmoduls der Steuereinrichtung der Fig. 4; und
- Fig. 6: ein schematisches Blockschaltbild des Positionsregelmoduls der Steuereinrichtung der Fig. 4.

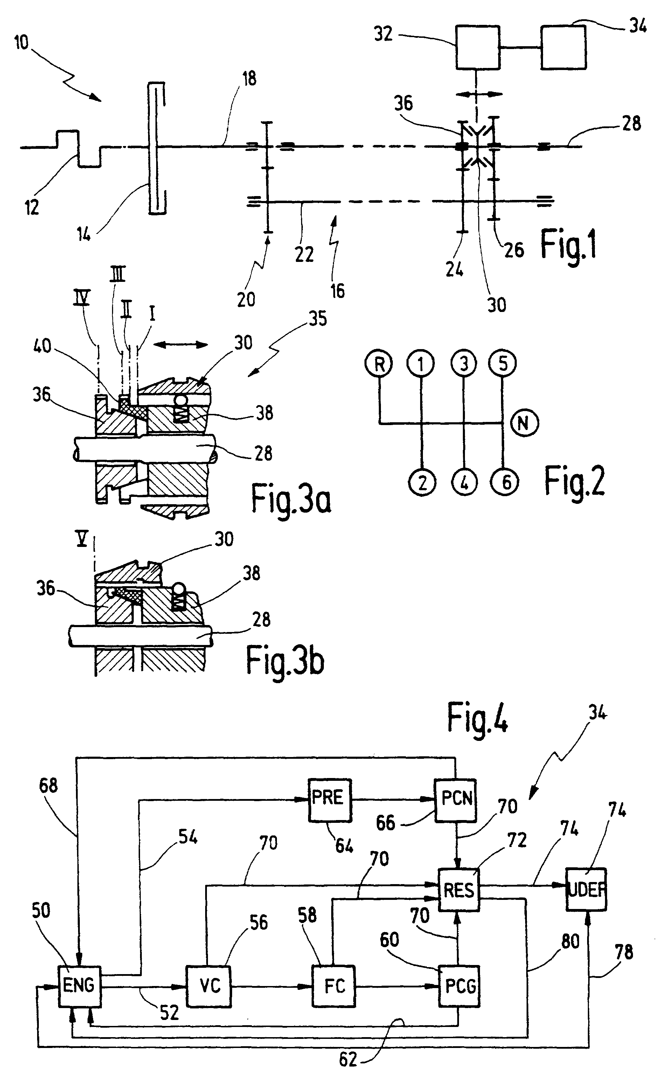

In Fig. 1 ist ein automatisierter Antriebsstrang für ein Kraftfahrzeug generell mit 10 bezeichnet.

Der Antriebsstrang beinhaltet einen Verbrennungsmotor 12, eine Hauptkupplung 14 und ein Stufengetriebe 16.

Das Stufengetriebe 16 weist eine Eingangswelle 18 auf, die über eine Konstante 20 mit einer Vorgelegewelle 22 gekoppelt ist. Es versteht sich, daß ein solcher Getriebeaufbau lediglich beispielhaft ist. Das Stufengetriebe 16 kann ein Front- oder Heckantriebsgetriebe sein.

Das Stufengetriebe 16 weist ferner eine Mehrzahl von Radsätzen für 5, 6 oder mehr Vorwärtsgänge und wenigstens einen Rückwärtsgang auf. Von diesen Radsätzen sind beispielhaft ein Radsatz 24 (z.B. für einen zweiten Gang) und ein Radsatz 26 (z.B. für einen vierten Gang) gezeigt.

Die Radsätze 24, 26 beinhalten jeweils ein Festrad, das drehfest mit der Vorgelegewelle 22 verbünden ist, sowie ein Losrad. Die Losräder sind drehbar an einer Ausgangswelle 28 gelagert.

Die Losräder der Radsätze 24, 26 sind jeweils über eine Synchronkupplung drehfest mit der Ausgangswelle 28 verbindbar.

Hierzu sind die zwei Synchronkupplungen, die in der Fig. 1 nicht näher bezeichnet sind, in an sich üblicher Weise in einem Synchronpaket vereinigt. Eine Schaltmuffe 30 dient dazu, entweder den zweiten Gang oder den vierten Gang einzulegen.

Die Schaltmuffe 30 wird von einem Aktuator 32 betätigt, d.h. in einer Richtung parallel zur Ausgangswelle 28 hin- und herbewegt.

Der Aktuator 32 wird von einer Steuereinrichtung 34 angesteuert.

Es versteht sich, daß die Steuereinrichtung 34 auch dazu verwendet werden kann, die Hauptkupplung 14 mittels eines geeigneten Aktuators (nicht gezeigt) zu betätigen. Ferner versteht sich, daß die Steuereinrichtung 34 Teil einer Gesamtsteuerung für den Antriebsstrang 10 sein kann.

Obgleich Fig. 1 einen klassischen Antriebsstrang mit einem Kraftübertragungszweig darstellt, ist die vorliegende Erfindung auch auf Doppelkupplungsgetriebe anwendbar, die zwei parallele Kraftübertragungszweige sowie zwei Hauptkupplungen 14 aufweisen.

Fig. 2 zeigt ein herkömmliches Gangwechselschema (H-Schema) für ein Stufengetriebe 16 mit sechs Vorwärtsgängen und einem Rückwärtsgang. Das Einlegen eines Ganges erfolgt jeweils von einer zentralen neutralen Position in eine jeweilige Endposition einer Schaltgasse, die einer Gangposition entspricht.

Es versteht sich, daß diese Art von Gangwechselschema lediglich beispielhaft ist und lediglich der Erläuterung der Begriffe "Gangposition" und "neutrale Position" dienen soll. In der Praxis weisen automatisierte Antriebsstränge 10 häufig entweder gar keinen Ganghebel auf oder einen Ganghebel, mit dem lediglich ein Hochschalten oder Herunterschalten möglich ist, oder einen Ganghebel mit der Kodierung P-R-N-D, wie in Wandlerautomaten üblich.

Figuren 3a und 3b zeigen jeweils in schematischer Schnittdarstellung eine Synchronkupplung 35. Die Synchronkupplung 35 dient zum drehfesten Verbinden der Ausgangswelle 28 mit einem Losrad 36 des Radsatzes 24 für den zweiten Gang. Zu diesem Zweck weist die Synchronkupplung 35 eine schematisch angedeutete Schaltmuffe 30 auf, die in axialer Richtung an einer Führungsmuffe 38 beweglich gelagert ist. Die Schaltmuffe 30 und die Führungsmuffe 38 sind drehfest mit der Ausgangswelle 28 verbunden.

Zwischen der Schaltmuffe 30 und dem Losrad 36 ist ein Reibkegel 40 vorgesehen, der von der Schaltmuffe 30 gegen eine entsprechende Reibfläche des Losrades 36 anpreßbar ist. Hierdurch lassen sich die Drehzahlen der Ausgangswelle 28 und des Losrades 36 zur Herstellung einer formschlüssigen Verbindung synchronisieren.

Es versteht sich, daß die Synchronkupplung 35 ferner Sperrmittel (nicht gezeigt) aufweisen kann, die das Herstellen eines Formschlusses zwischen der Schaltmuffe 30 und dem Losrad 36 verhindern, bis die Drehzahldifferenz hinreichend klein ist.

Es lassen sich bei der Synchronkupplung 35 im wesentlichen vier unterschiedliche Positionen der Schaltmuffe 30 unterscheiden. In Fig. 3a ist die Schaltmuffe 30 in einer neutralen Position I gezeigt, die der Position N in Fig. 2 entspricht. In einer Position II liegt die Schaltmuffe 30 an dem Reibkegel 40 an. Die Position II entspricht einer Ansynchronisierungsposition. In dieser Position führt eine weitere Kraftausübung in Richtung Formschluß in der Regel zu keinen weiteren oder nur noch sehr kleinen Positionsveränderungen, sondern zu dem oben beschriebenen Drehzahlangleich. Erst sobald dieser realisiert ist, läßt sich die Schaltmuffe 30 weiterbewegen, wobei direkt im Anschluß an die Ansynchronisierungsposition II eine Durchschaltposition III erreicht wird.

Die Position, bei der der Formschluß zwischen der Schaltmuffe 30 und dem Losrad 36 erfolgt ist, wird als Gangposition IV bezeichnet. Diese Position entspricht der Endposition in den jeweiligen Schaltgassen für die in Fig. 2 dargestellten Gänge.

Fig. 4 zeigt ein schematisches Blockschaltbild einer Ausführungsform der Steuereinrichtung 34 des Antriebsstranges 10.

Die Steuereinrichtung 34 ist bei dieser Ausführungsform in Form von Modulen realisiert, bei denen es sich bspw. um Softwaremodule handeln kann, die durch geeigneten Aufruf auf einem Mikroprozessor oder -controller abgearbeitet werden können.

Standardmäßig befindet sich die Steuereinrichtung 34 in einer Schleife eines Endpositionsmoduls ENG 50.

Im Endpositionsmodul 50 befinden sich entweder sämtliche Schaltmuffen 30 des Stufengetriebes 16 in der neutralen Stellung, oder eine oder mehrere der Schaltmuffen 30 befindet sich in einer Gangposition IV (vgl. Fig. 3b). Der Aktuator 32 wird durch dieses Modul 50 nicht aktiv betätigt, er befindet sich im fehlerfreien Ruhezustand.

Im Endpositionsmodul 50 erfolgt ferner eine Abfrage auf eine Gangeinlegeaufforderung 52 hin. Sobald eine solche Gangeinlegeaufforderung 52 erfaßt wird, erfolgt ein Ablauf zum Einlegen des angeforderten Ganges (s.u.).

Wenn im Gegenteil hierzu bereits ein Gang eingelegt ist, erfolgt eine Abfrage auf eine Gangauslegeanforderung 54 hin. Sobald diese erfolgt, werden entsprechende Module zum Auslegen des Ganges aufgerufen.

Bei Erfassung einer Gangeinlegeaufforderung 52 ausgehend von einer neutralen Position I wird zunächst ein Geschwindigkeitsregelmodul VC 56 aktiv. Das Geschwindigkeitsregelmodul 56 gibt einen Geschwindigkeitssollwert für die Schaltmuffe 30 vor. Die Schaltmuffe 30 wird folglich aus der Position I in Richtung der Position II mit einer bestimmten, vorgegebenen Geschwindigkeit bewegt.

Sobald die Ansynchronisierungsposition II erreicht ist, was bspw. durch eine Wegerkennung erfaßt werden kann, erfolgt eine Deaktivierung des Geschwindigkeitsregelmoduls 56 und eine Aktivierung eines Synchronkraftsteuermoduls FC 58.

Das Synchronkraftsteuermodul 58 gibt eine bestimmte Soll-Synchronkraft vor, mit der die Schaltmuffe 30 gegen den Reibkegel 40 drückt. Das Synchronkraftsteuermodul 58 kann dabei als reines Steuermodul ohne Rückkoppelung ausgeführt sein; es ist jedoch auch eine Regelung im geschlossenen Kreis denkbar.

Sobald eine hinreichende Synchronisierung erfolgt ist, schaltet die Schaltmuffe 30 durch und erreicht unmittelbar darauf eine Durchschaltposition III. Sobald die Durchschaltposition III erreicht ist, wird das Synchronkraftsteuermodul 58 deaktiviert und ein Positionsregelmodul PCG 60 aktiviert.

Anstelle einer Abfrage der Durchschaltposition III ist es auch möglich, eine Abfrage einer Differenzdrehzahl zwischen Losrad und Vorgelegewelle hin durchzuführen. In diesem Fall würde das Synchronkraftsteuermodul 58 deaktiviert und das Positionsregelmodul 60 aktiviert, sobald eine bestimmte Differenzdrehzahl (gewöhnlich ≈ 0) erreicht ist.

Eine weitere alternative Möglichkeit des Erfassens des Endes der Synchronisierung besteht darin, die Winkel von Schaltmuffe 30 einerseits und Reibkegel 40 andererseits zu ermitteln. Erst wenn aufgrund eines Freigebens der Sperrmittel eine geeignete Winkelübereinstimmung erzielt ist, kann ein Durchschalten erfolgen, was dann als Synchronisierungsende bestimmt wird.

Bei Aktivierung des Positionsregelmoduls 60 erfolgt eine Lageregelung hin zu der Sollposition IV, d.h. der Gangposition.

Sobald diese Position erreicht ist, erfolgt eine Endpositionrückmeldung 68, und das Positionsregelmodul 66 wird deaktiviert und das Endpositionsmodul 50 wieder aktiviert.

Sofern ein Gang eingelegt ist, erfolgt, wie oben erwähnt, eine Abfrage hin auf eine Gangauslegeaufforderung 54. Sobald eine derartige Aufforderung erfaßt ist, wird das Modul 50 deaktiviert und ein Vorspannkraftsteuermodul PRE 64 aktiviert. Das Modul 64 baut eine Vorspannkraft gegen die Schaltmuffe 30 in Richtung der neutralen Position I auf. Die Vorspannkraft ist so gewählt, daß der Gang aufgrund des über das jeweilige Losrad 36 übertragenen Momentes nicht sofort ausgelegt wird. Erst wenn dieses Moment einbricht, bspw. durch Gasrücknahme des Verbrennungsmotors 12, "flutscht" die Schaltmuffe 30 aus dem formschlüssigen Eingriff des jeweiligen Losrades heraus in Richtung der neutralen Position I.

Sobald erfaßt ist, daß die Schaltmuffe 30 nicht mehr in der Gangposition IV ist, wird das Vorspannkraftsteuermodul 64 deaktiviert und ein Positionsregelmodul PCN 66 aktiviert. Das Positionsregelmodul 66 regelt die Position der Schaltmuffe 30 auf die geforderte neutrale Sollposition I. Sobald diese erreicht ist, erfolgt eine Endpositionsrückmeldung 68, das Positionsregelmodul 66 wird deaktiviert und das Endpositionsmodul 50 aktiviert.

Während der Aktivierung der Module 56, 58, 60 oder 66 ist es jeweils denkbar, daß eine Getriebeblockierung auftritt oder der Fahrer die Gangein-/-auslegeaufforderung 52 zurücknimmt, also wieder in die vorherige Position zurückschalten will. In diesem Fall erfolgt eine Fehlermeldung 70 an ein Rücksetzmodul 72. Das Rücksetzmodul 72 führt eine Regelung in die zuletzt eingenommene Position durch. Das Rücksetzmodul 72 steht in bidirektionaler Verbindung 74 mit einem Start-/Fehlermodul 76. Das Start-/Fehlermodul 76 wird von dem Rücksetzmodul 72 aufgerufen, wenn sich eine definierte Position des Schaltgliedes 30 nicht erzielen läßt. In diesem Fall erfolgt eine Fehlerdiagnose und -auswertung. Je nach erfaßtem Betriebszustand wird dann entweder über die Schnittstelle 74 nochmals versucht, das Rücksetzmodul 72 aufzurufen. Alternativ hierzu wird, wenn bereits eine bestimmte Endposition I bzw. IV der Schaltmuffe 30 erlangt worden ist, das Endpositionsmodul 50 aufgerufen. Dies erfolgt über eine Schnittstelle 78, die bidirektional ausgebildet ist. so ist es denkbar, daß auch im Zustand einer Endposition I. IV der Schaltmuffe 30 aus Fehlergründen die Kontrolle verloren geht, in welchem Fall von dem Modul 50 das Start-/Fehlermodul 76 aufgerufen wird. Das Modul 76 wird auch bei Start des Kraftfahrzeuges aufgerufen, da in diesem Fall die Position der Schaltmuffe 30 ebenfalls zunächst unbekannt ist.

Während der Aktivierung von einem der Module 56, 58, 60 oder 66 erfolgt ferner eine Deaktivierung und gleichzeitige Aktivierung des Rücksetzmodules 72, wenn ein bestimmter Sollwert im Falle einer Regelung nicht innerhalb einer bestimmten Zeitspanne erreicht wird. In diesem Fall ist davon auszugehen, daß eine Getriebeblockierung oder ähnliches aufgetreten ist.

Ferner erfolgt dann eine Überprüfung des Zustandes der Hauptkupplung(en) 14, um Schäden an dem Getriebe 16 und/oder an anderen Elementen des Antriebsstranges 10 zu vermeiden.

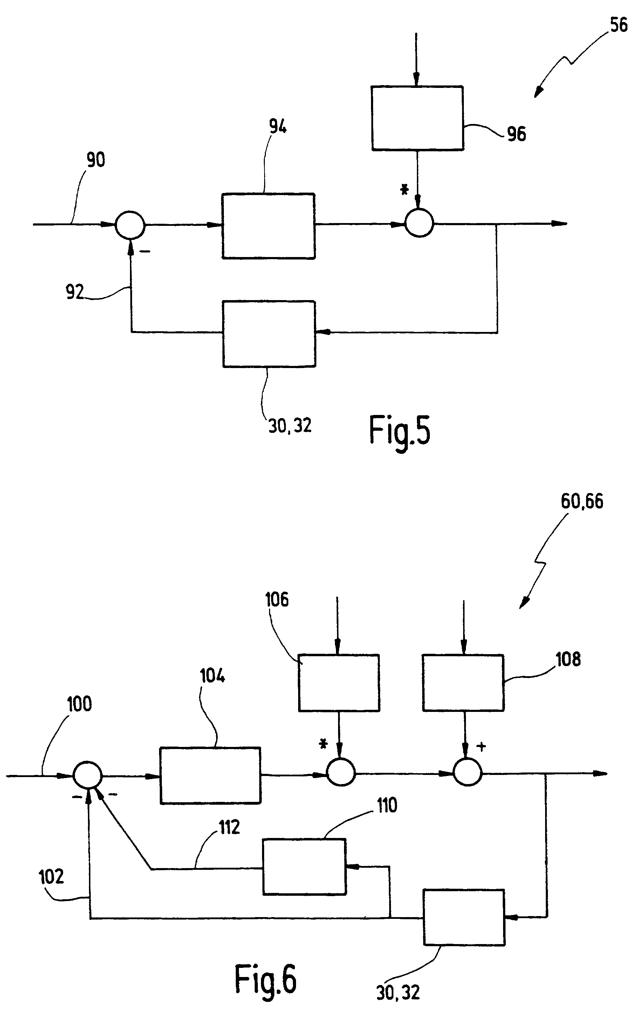

Fig. 5 zeigt eine Ausführungsform des Geschwindigkeitsregelmoduls 56.

Das Geschwindigkeitsregelmodul 56 ist als ein geschlossener Regelkreis ausgebildet. Sollgröße ist eine Sollgeschwindigkeit 90 der Schaltmuffe 30 (oder ein hierzu proportionaler Parameter). Einem PID-Regler 94 wird eine Differenz zwischen der Sollgeschwindigkeit 90 und einer gemessenen Istgeschwindigkeit 92 der Schaltmuffe 30 (oder eines hierzu proportionalen Parameters) zugeführt. Der Ausgang des PID-Reglers 94 wird auf den Aktuator 32 gelegt. Ferner erfolgt eine Störgrößenkorrektur 96, bei der bspw. die Batteriespannung als Störgröße aufgeschaltet wird.

Die tatsächliche Geschwindigkeit der Schaltmuffe 30 läßt sich bspw. indirekt über die Drehzahl eines Elektromotors mittels eines Hall-Sensors messen.

Fig. 6 zeigt eine Ausführungsform eines Positionsregelmoduls, wie es bspw. als Positionsregelmodul 60 oder 66 verwendet werden kann.

Das Positionsregelmodul 60 bzw. 66 ist ebenfalls als geschlossener Regelkreis ausgebildet. Sollgröße ist eine Sollposition der Schaltmuffe 30 (oder ein hierzu proportionaler Parameter). Einem PI-Regler wird eine Differenz aus der Sollposition 100 und der Summe einer Istposition 102 der Schaltmuffe 30 sowie einer Istgeschwindigkeit 112 der Schaltmuffe 30 (oder jeweils hierzu proportionaler Parameter) eingegeben. Der Ausgang des PI-Reglers wird an den Aktuator 32 angelegt. Dabei erfolgt vorab eine Störgrößenkorrektur 106, in der bspw. die Batteriespannung oder eine Getriebeöltemperatur berücksichtigt werden. Ferner kann zur Vermeidung von ungünstigen Haft-/Gleitreibungseffekten eine Dither-Funktion angelegt werden.

Zur Ermittlung der Istgeschwindigkeit 112 der Schaltmuffe 30 ist ein D-Element 110 vorgesehen, das die Istgeschwindigkeit 112 aus der Istposition 102 durch Differenzieren ermittelt.

Der Aktuator 32 ist bei dieser Ausführungsform vorzugsweise gebildet durch eine oder mehrere Schaltwalzen (nicht dargestellt). Die Schaltwalzen werden vorzugsweise angetrieben durch Elektromotoren. Zur Regelung bzw. Einrastung in den Endpositionen I, IV sind an der Schaltwalze bzw. an den Schaltwalzen jeweils geeignete Verriegelungs- bzw. Rastmittel vorgesehen, bspw. in Form von Rastfederelementen.

Im Falle des Auftretens von Fehlern ist es möglich, einem derartigen Aktuatorsystem Notfalleigenschaften zu erteilen, so daß bspw. eine Heimfahrt in einem eingelegten Gang möglich ist, Gangwechsel jedoch gesperrt werden. Ferner ist es bei einer derartigen Ausführungsform eines Antriebsstranges 10 möglich, bei Auslieferung des Kraftfahrzeuges oder bei Wartung des Kraftfahrzeuges Kalibrierungen der Aktuatoren/Sensoren vorzunehmen. Dies kann auch durch selbstlernende Algorithmen erfolgen.

## Patentansprüche

1. Automatisierter Antriebsstrang (10) für ein Kraftfahrzeug, mit wenigstens einer Hauptkupplung (14) und einem Stufengetriebe (16), wobei das Stufengetriebe (16) eine Mehrzahl von synchronisierten Gängen aufweist, die mittels einer Aktuatoreinrichtung (32) ein- und auslegbar sind, die von einer Steuereinrichtung (34) gesteuert ist, wobei die Steuereinrichtung (34) ein Synchronkraftsteuermodul (58) aufweist, und wobei die Aktuatoreinrichtung (32) zum Einlegen eines Ganges ein Schaltglied (30) gemäß einer Synchronkraftvorgabe durch das Synchronkraftsteuermodul (58) in Richtung einer Gangposition (IV) bewegt, in der der Gang eingelegt ist,
**dadurch gekennzeichnet, daß**
die Steuereinrichtung (34) ferner ein Geschwindigkeitsregelmodul (56) aufweist und daß die Aktuatoreinrichtung (32) zum Einlegen eines Ganges das Schaltglied (30) zunächst gemäß einer Geschwindigkeitsvorgabe durch das Geschwindigkeitsregelmodul (56) und anschließend gemäß einer Synchronkraftvorgabe durch das Synchronkraftsteuermodul (58) von der neutralen Position (N; I) in Richtung der Gangposition (IV) bewegt.

2. Automatisierter Antriebsstrang nach Anspruch 1, **dadurch gekennzeichnet, daß** das Geschwindigkeitsregelmodul (56) einen PID-Regler (94) aufweist.

3. Automatisierter Antriebsstrang nach Anspruch 1 oder 2, **dadurch gekennzeichnet, daß** die Steuereinrichtung (34) ferner ein Positionsregelmodul (60) aufweist und daß die Aktuatoreinrichtung (32) zum Einlegen eines Ganges das Schaltglied (30) zunächst gemäß der Geschwindigkeitsvorgabe durch das Geschwindigkeitsregelmodul (56), anschließend gemäß der Synchronkraftvorgabe durch das Synchronkraftsteuermodul (58) und schließlich gemäß einer Positionsvorgabe durch das Positionsregelmodul (60) in die Gangposition (IV) bewegt.

4. Automatisierter Antriebsstrang nach Anspruch 3, **dadurch gekennzeichnet, daß** das Positionsregelmodul (60) einen PI-Regler (104) aufweist.

5. Automatisierter Antriebsstrang nach Anspruch 4, **dadurch gekennzeichnet, daß** das Positionsregelmodul (60) die Istposition (100) des Schaltgliedes (30) und die Istgeschwindigkeit (112) des Schaltgliedes (30) auf den Eingang des PI-Reglers (104) rückführt.

6. Automatisierter Antriebsstrang nach einem der Ansprüche 3 bis 5, **dadurch gekennzeichnet, daß** die Umschaltung von dem Synchronkraftsteuermodul (58) auf das Positionsregelmodul (60) erfolgt, sobald das Schaltglied (30) eine Durchschaltposition (III) erreicht hat.

7. Automatisierter Antriebsstrang nach einem der Ansprüche 3 bis 5, **dadurch gekennzeichnet, daß** die Umschaltung von dem Synchronkraftsteuermodul (58) auf das Positionsregelmodul (60) erfolgt, sobald zwischen den zu synchronisierenden Elementen (35, 28) eine Differenzdrehzahl erreicht ist.

8. Automatisierter Antriebsstrang nach einem der Ansprüche 1 bis 7, **dadurch gekennzeichnet, daß** die Umschaltung von dem Geschwindigkeitsregelmodul (56) auf das Synchronkraftsteuermodul (58) erfolgt, sobald das Schaltglied (30) eine Ansynchronisierungsposition (II) erreicht hat.

9. Automatisierter Antriebsstrang nach einem der Ansprüche 1 bis 8, **dadurch gekennzeichnet, daß** die Aktuatoreinrichtung (32) zum Auslegen eines Ganges das Schaltglied (30) gemäß einer Positionsvorgabe durch ein Positionsregelmodul (66) in Richtung neutrale Position (N; I) bewegt.

10. Automatisierter Antriebsstrang nach Anspruch 9, **dadurch gekennzeichnet, daß** die Steuereinrichtung (34) ferner ein Vorspannkraftsteuermodul (64) aufweist und daß die Aktuatoreinrichtung (32) zum Auslegen eines Ganges das Schaltglied (30) zunächst gemäß einer Vorspannkraftvorgabe durch das Vorspannkraftsteuermodul (64) in Auslegerichtung vorspannt und anschließend gemäß der Positionsvorgabe durch das Positionsregelmodul (66) von der Gangposition (IV) in die neutrale Position (N; I) bewegt.

11. Automatisierter Antriebsstrang nach einem der Ansprüche 1 bis 10, **dadurch gekennzeichnet, daß** die Aktuatoreinrichtung (32) einen Elektromotor sowie Verriegelungsmittel aufweist, die das Schaltglied in der jeweiligen Position halten, wenn der Elektromotor abgeschaltet ist.

12. Automatisierter Antriebsstrang nach einem der Ansprüche 1 bis 11, **dadurch gekennzeichnet, daß** Sollwerte (90) für das Geschwindigkeitsregelmodul (56) und/oder das Synchronkraftsteuermodul (58) fahrsituationsabhängig bestimmt werden.

13. Automatisierter Antriebsstrang nach einem der Ansprüche 1 bis 12, **dadurch gekennzeichnet, daß** die Sollkraft im Synchronkraftsteuermodul (58) durch einen rampenförmig ausgebildeten Sollkraftverlauf vorgegeben wird.

14. Verfahren zum Einlegen eines Ganges eines Stufengetriebes (16) eines Antriebsstranges (10) mit dem Schritt, ein Schaltglied (30) gemäß einer Synchronkraftvorgabe durch ein Synchronkraftmodul (58) in Richtung einer Gangposition (IV) zu bewegen, in der der Gang eingelegt ist,
**dadurch gekennzeichnet, daß**
das Schaltglied (30) zum Einlegen eines Ganges zunächst gemäß einer Geschwindigkeitsvorgabe durch ein Geschwindigkeitsregelmodul (56) und anschließend gemäß einer Synchronkraftvorgabe durch das Synchronkraftsteuermodul (58) von der neutralen Position (N; I) in Richtung der Gangposition (IV) bewegt wird.

## Claims

1. Automated drive train (10) for a motor vehicle, with at least one main clutch (14) and a variable speed transmission (16), the variable speed transmission (16) having a large number of synchronised gears which can be engaged and disengaged by means of an actuator device (32) controlled by a control device (34), wherein the control device (34) has a synchronous force control module (58) and wherein the actuator device (32), to engage a gear, moves a shifting element (30) in the direction of a gear position (IV) in which the gear is engaged according to a synchronous force input by the synchronous force control module (58), **characterised in that** the control device (34) also has a speed control module (56) and **in that** the actuator device (32), to engage a gear, moves the shifting element (30) from the neutral position (N; I) in the direction of the gear position (IV), initially according to a speed input by the speed control module (56) and then according to a synchronous force input by the synchronous force control module (58).

2. Automated drive train according to claim 1, **characterised in that** the speed control module (56) has a PID controller (94).

3. Automated drive train according to claim 1 or 2, **characterised in that** the control device (34) also has a position control module (60) and **in that** the actuator device (32), to engage a gear, moves the shifting element (30) into the gear position (IV) initially according to the speed input by the speed control module (56), then according to the synchronous force input by the synchronous force control module (58) and finally according to a position input by the position control module (60).

4. Automated drive train according to claim 3, **characterised in that** the position control module (60) has a PI controller (104).

5. Automated drive train according to claim 4, **characterised in that** the position control module (60) returns the actual position (100) of the shifting element (30) and the actual speed (112) of the shifting element (30) to the input of the PI controller (104).

6. Automated drive train according to any one of claims 3 to 5, **characterised in that** switching from the synchronous force control module (58) to the position control module (60) takes place as soon as the shifting element (30) has reached a shifting position (III).

7. Automated drive train according to any one of claims 3 to 5, **characterised in that** switching from the synchronous force control module (58) to the position control module (60) takes place as soon as a differential rotational speed has been attained between the elements (35, 28) to be synchronised.

8. Automated drive train according to any one of claims 1 to 7, **characterised in that** switching from the speed control module (56) to the synchronous force control module (58) takes place as soon as the shifting element (30) has attained a synchronisation position (II).

9. Automated drive train according to any one of claims 1 to 8, **characterised in that** the actuator device (32), to disengage a gear, moves the shifting element (30) in the direction of the neutral position (N; I) according to a position input by a position control module (66).

10. Automated drive train according to claim 9, **characterised in that** the control device (34) also has a biasing force control module (64) and **in that** the actuator device (32), to disengage a gear, biases the shifting element (30) in the disengagement direction, initially according to a biasing force input by the biasing force control module (64) and then moves it from the gear position (IV) into the neutral position (N; I) according to the position input by the position control module (66).

11. Automated drive train according to any one of claims 1 to 10, **characterised in that** the actuator device (32) has an electric motor and a locking means keeping the shifting member in the respective position when the electric motor is switched off.

12. Automated drive train according to any one of claims 1 to 11, **characterised in that** set values (90) are determined as a function of the driving situation for the speed control module (56) and/or the synchronous force control module (58).

13. Automated drive train according to any one of claims 1 to 12, **characterised in that** the set force in the synchronous force control module (58) is predetermined by a ramp-shaped set force curve.

14. Method for engaging a gear of a variable speed transmission (16) of a drive train (10) comprising the step of moving a shifting element (30) in the direction of a gear position (IV) in which the gear is engaged, according to a synchronising force input by a synchronising force module (58), **characterised in that** the shifting element (30) is moved from the neutral position (N; I) in the direction of the gear position (IV), initially according to a speed input by a speed control module (56) and then according to a synchronising force input by the synchronising force control module (58), to engage a gear.

## Revendications

1. Ligne de transmission (10) automatique pour un véhicule automobile, comportant au moins un embrayage principal (14) et une transmission à engrenages (16), la transmission à engrenages (16) comportant une pluralité de rapports synchronisés qui peuvent être engagés et dégagés au moyen d'un dispositif actionneur (32), lequel est commandé par un dispositif de commande (34), le dispositif de commande (34) comportant un module de commande de force synchrone (58), et le dispositif actionneur (32), pour l'engagement d'un rapport, déplaçant un organe de commutation (30) selon une force synchrone imposée par le module de commande de force synchrone (58) en direction d'une position de rapport (IV) dans laquelle le rapport est engagé,
**caractérisée en ce que**
le dispositif de commande (34) comporte en outre un module de régulation de vitesse (56) et **en ce que** le dispositif actionneur (32), pour l'engagement d'un rapport, déplace l'organe de commutation (30) de la position neutre (N ; I) en direction de la position de rapport (IV), d'abord selon une vitesse imposée par le module de régulation de vitesse (56) puis selon une force synchrone imposée par le module de commande de force synchrone (58).

2. Ligne de transmission automatique selon la revendication 1, **caractérisée en ce que** le module de régulation de vitesse (56) comporte un régulateur PID (94).

3. Ligne de transmission automatique selon la revendication 1 ou 2, **caractérisée en ce que** le dispositif de commande (34) comporte en outre un module de régulation de position (60) et **en ce que** le dispositif actionneur (32), pour l'engagement d'un rapport, déplace l'organe de commutation (30) dans la position de rapport (IV) d'abord selon la vitesse imposée par le module de régulation de vitesse (56), puis selon la force synchrone imposée par le module de commande de force synchrone (58) et finalement selon une position imposée par le module de régulation de position (60).

4. Ligne de transmission automatique selon la revendication 3, **caractérisée en ce que** le module de régulation de position (60) comporte un régulateur PI (104).

5. Ligne de transmission automatique selon la revendication 4, **caractérisée en ce que** le module de régulation de position (60) ramène la position réelle (100) de l'organe de commutation (30) et la vitesse réelle (112) de l'organe de commutation (30) à l'entrée du régulateur PI (104).

6. Ligne de transmission automatique selon l'une des revendications 3 à 5, **caractérisée en ce que** la commutation du module de commande de force synchrone (58) au module de régulation de position (60) s'effectue dès que l'organe de commutation (30) atteint une position de commutation (III).

7. Ligne de transmission automatique selon l'une des revendications 3 à 5, **caractérisée en ce que** la commutation du module de commande de force synchrone (58) au module de régulation de réglage de position (60) s'effectue dès qu'une vitesse de rotation différentielle est atteinte entre les éléments (35, 28) à synchroniser.

8. Ligne de transmission automatique selon l'une des revendications 1 à 7, **caractérisée en ce que** la commutation du module de régulation de la vitesse (56) au module de commande de force synchrone (58) s'effectue dès que l'organe de commutation (30) a atteint une position de début de synchronisation (II).

9. Ligne de transmission automatique selon l'une des revendications 1 à 8, **caractérisée en ce que** le dispositif actionneur (32), pour l'engagement d'un rapport, déplace l'organe de commutation (30) selon une position imposée par un module de régulation de position (66) en direction de la position neutre (N ; I).

10. Ligne de transmission automatique selon la revendication 9, **caractérisée en ce que** le dispositif de commande (34) comporte en outre un module de commande de force de précontrainte (64) et **en ce que** le dispositif actionneur (32), pour l'engagement d'un rapport, précontraint d'abord l'organe de commutation (30) selon une force de précontrainte imposée par le module de commande de force de précontrainte (64) dans le sens du dégagement, puis le déplace de la position de rapport (IV) à la position neutre (N ; I), selon la position imposée par le module de régulation de position (66).

11. Ligne de transmission automatique selon l'une des revendications 1 à 10, **caractérisée en ce que** le dispositif actionneur (32) comporte un moteur électrique ainsi que des moyens de verrouillage qui maintiennent l'organe de commutation dans sa position respective lorsque le moteur électrique est à l'arrêt.

12. Ligne de transmission automatique selon l'une des revendications 1 à 11, **caractérisée en ce que** des valeurs de consigne (90) pour le module de régulation de vitesse (56) et/ou le module de commande de force synchrone (58) sont déterminées en fonction de la situation de conduite.

13. Ligne de transmission automatique selon l'une des revendications 1 à 12, **caractérisée en ce que** la force de consigne dans le module de commande de force synchrone (58) est prédéfinie par une allure de la force de consigne en forme de rampe.

14. Procédé pour engager un rapport d'une transmission à engrenages (16) d'une ligne de transmission (10) avec pour étape de déplacer un organe de commutation (30) selon une force synchrone imposée par un module de force synchrone (58) en direction d'une position de rapport (IV) dans laquelle le rapport est engagé, **caractérisé en ce que**
l'organe de commutation (30), pour engager un rapport, est déplacé de la position neutre (N ; I) en direction de la position de rapport (IV), d'abord selon une vitesse imposée par le module de régulation de vitesse (56) puis selon une force synchrone imposée par le module de commande de force synchrone (58).
